# EUROPEAN PATENT APPLICATION

(11) **EP 1 657 893 A1**
(43) Date of publication of application: **17.05.2006**
(21) Application number: 05024932.5
(22) Date of filing: 15.11.2005
(51) Int. Cl.: H04M 1/57

(54) **Apparatus and method for reporting incoming call or message reception through voice synthesis in mobile communication terminal**

(30) Priority: 15.11.2004 KR 2004093145
(71) Applicant: Samsung Electronics Co., Ltd., Suwon-si, Gyeonggi-Do (KR)
(72) Inventor: Jin, Jeong-Gyu Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed are an apparatus and a method for reporting incoming call or message reception through a voice in a mobile communication terminal. The apparatus for reporting an incoming call in a mobile communication terminal includes a feature memory block for storing voice features extracted from a caller's voice correspondingly to information regarding the caller, a report message memory block for storing in a character type a message of reporting the incoming call, a control unit for, if an incoming call is detected, extracting information regarding the caller from the detected incoming call and searching the feature memory block for voice features corresponding to the caller information, and a voice synthesizing unit for outputting a message of reporting the incoming call by performing voice synthesis based on the searched voice features.

## Description

The present invention relates to a mobile communication terminal, and more particularly to an apparatus and a method capable of reporting an incoming call or message reception by a caller's voice.

When a call is received, a caller ID function displays the phone number and the name of a counterpart (a caller) of the call, thereby allowing a receiver (called party) to recognize the caller before answering the call. According to the caller ID function, a portable phone searches a phone book by using a received caller ID and displays the name of the caller or the phone number of the caller when the name or the phone number is located in the phone book.

Mobile terminals such as a portable phone and a personal digital assistant device have functions that have become increasingly diversified, so that they can now display a picture of the caller as well as the name or the phone number of the caller. However, since these are visually displayed, the user may not recognize the counterpart until the user looks at a display unit.

Therefore, to identify callers, the user may set up various ringer sounds according to counterpart callers. However, as the number of counterparts increases, the user is limited in remembering all the ringer sounds for all the counterparts and may even have an economic burden in the case of being charged for services such as a charged coloring service.

Accordingly, the object of the present invention is to provide an apparatus and a method for reporting message reception or an incoming call by a caller's voice in a mobile communication terminal.

This object is solved by the subject matter of the independent claims.

Preferred embodiments are defined by the dependent claims.

To accomplish the above, there is provided an apparatus for reporting an incoming call in a mobile communication terminal, the apparatus including a feature memory block for storing voice features extracted from a caller's voice corresponding to information regarding the caller, a report message memory block for storing in a character type a message for reporting the incoming call, a control unit for, if an incoming call is detected, extracting information regarding the caller from the detected incoming call and searching the feature memory block for voice features corresponding to the caller information and a voice synthesizing unit for outputting a message reporting the incoming call by performing voice synthesis based on the searched voice features.

According to another aspect of the present invention, there is provided a method for reporting an incoming call in a mobile communication terminal including a feature memory block and a report message memory block, the mobile communication terminal having a phone function, the feature memory block storing voice features extracted from a caller's voice corresponding to information regarding the caller, the report message memory block storing in a character type a message reporting the incoming call, the method including the steps of detecting the incoming call, extracting information regarding the caller from the incoming call, searching the feature memory block for voice features corresponding to the extracted information regarding the caller, and outputting the message reporting the incoming call by performing voice synthesis based on the searched voice features.

According to another aspect of the present invention, there is provided a method for receiving a message having information regarding at least one of a name, a caller, and a call back number, comparing received information with at least one user registration number, selecting previously-registered voice features if it is determined that the received information is identical to the user registration number, selecting previously-registered default voice features if it is determined that the received information is not identical to the user registration number and outputting synthetic sound made by using the selected voice features or default voice features.

According to a further aspect of the present invention, there is provided an apparatus for reporting an incoming call or for reporting a voice message placed on the occasion of an incoming call in a mobile communication terminal, the apparatus comprising: a feature memory block for storing voice features corresponding to information regarding a caller having a corresponding voice; a report message memory block for storing in a character type a message reporting the incoming call; a control unit for, if an incoming call or voice message is detected, extracting information regarding the caller from the detected incoming call or voice message and searching the feature memory block for voice features corresponding to the caller information; and a voice synthesizing unit for outputting a message reporting the incoming call by performing voice synthesis based on the searched voice features.

According to yet a further aspect of the present invention, there is provided a method for reporting an incoming call or for reporting a voice message placed on the occasion of an incoming call in a mobile communication terminal including a feature memory block and a report message memory block, the mobile communication terminal having a phone function, the feature memory block storing voice features corresponding to information regarding a caller having a corresponding voice, the report message memory block storing in a character type a message reporting the incoming call, the method comprising the steps of: detecting the incoming call or voice message; extracting information regarding the caller from the incoming call or voice message; searching the feature memory block for voice features corresponding to the extracted information regarding the caller; and outputting the message reporting the incoming call by performing voice synthesis based on the searched voice features.

The present invention will be more apparent from the following detailed description taken in conjunction with the accompanying drawings, in which:
FIG. 1 is a block diagram illustrating the structure of a mobile communication terminal according to an embodiment of the present invention;
FIG. 2 illustrates the format of a phone book included in the mobile communication terminal according to an embodiment of the present invention; and
FIG. 3 is a flowchart illustrating a method for reporting an incoming call using a voice according to an embodiment of the present invention.

Hereinafter, preferred embodiments of the present invention will be described in detail with reference to the accompanying drawings, in which the same or similar components in drawings are designated by the same reference numerals as far as possible although they are shown in different drawings. Also, hereinafter, specific items such as the contents of an incoming call reporting message will be given. However, these specific items will be given only in order to overall understand the present invention. Therefore, it is well known to those skilled in the art that the present invention can be realized without such specific items. In the following description of the present invention, a detailed description of known functions and configurations incorporated herein will be omitted when it may make the subject matter of the present invention unclear.

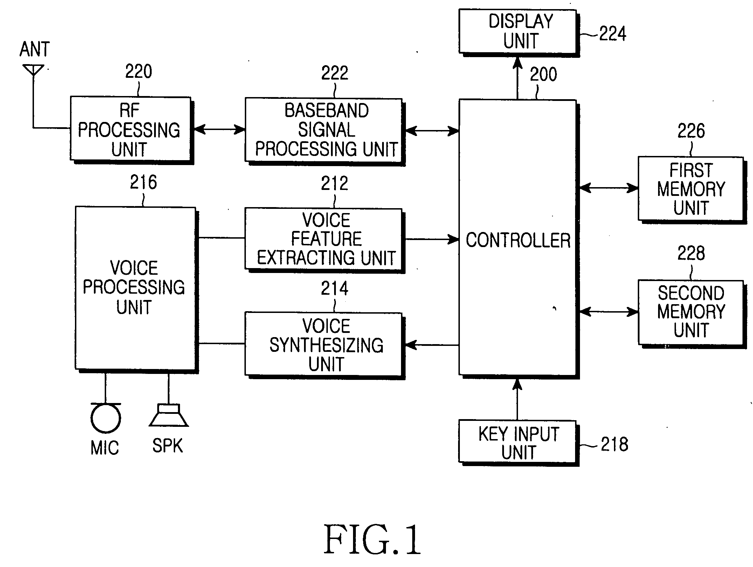

FIG. 1 is a block diagram illustrating the structure of a mobile communication terminal according to an embodiment of the present invention, which may perform a phone function together with at least one of various other functions such as a digital camera function, a digital multimedia broadcasting function, an MP3 function, a Telemetics function, etc. In addition, the mobile communication terminal may perform only the phone function. For the purpose of clarity, only items relating to the phone function will be shown and described according to the present invention.

If a controller 200 detects an incoming call, the controller 200 extracts information regarding a caller from the incoming call and searches a memory for voice features corresponding to the caller information. The caller information may include a name, a phone number, and a call back number of the caller. Herein, the controller 200 may be realized by using a QualComm MSM (mobile station modem) chip.

A voice feature extracting unit 212 extracts features from an input voice. The data of the features may be represented as the number of bytes per second (e.g., 200 bytes/second). In addition, the data of the features has a functional relationship to a frequency characteristic of a corresponding voice, the intensity of a voice signal, and the change in the intensity of the voice signal. A voice synthesizing unit 214 outputs an incoming call reporting message by performing voice synthesis based on previously-stored voice features of the caller under the control of the controller 200. A first memory unit 226 includes ROMs and RAMs, thereby storing programs and data used for performing the original functions of the mobile communication terminal.

A second memory unit 228 includes a feature memory block for storing voice features extracted from a caller's voice by the voice feature extracting unit 212 corresponding to information regarding the caller and a report message memory block for storing in a character type messages used for reporting an incoming call. Although these blocks may be realized in one memory, as shown in FIG. 1 the blocks may be separately realized in different memories. This is because, for example, when default messages for callers who have no stored specific report messages are stored, it is unnecessary to store the default message together with a phone book or in memory storing the phone book.

An RF processing unit 220 includes an RF transmitter for up-converting and amplifying a frequency of a signal to be transmitted and an RF receiver for low-noise amplifying a received signal and down-converting a frequency of the received signal. The RF processing unit 220 receives a baseband signal, converts the signal into an intermediate frequency signal, converts the intermediate frequency signal into a radio frequency signal, and transmits the radio frequency signal to a base station through an antenna. In contrast, a radio frequency signal received from the base station through the antenna is converted into an intermediate frequency signal and then a baseband signal. A baseband signal processing unit 222 is coupled with the RF processing unit 220 and the controller 200 and processes a baseband signal. If a microphone MIC converts the user's voice into an electrical signal, a voice processing unit 216 pulse-code modulates the electrical signal. In contrast, the voice processing unit 216 converts a pulse code modulated signal into an electrical signal so that a speaker SPK can output audible sound.

A key input unit 218 and a display unit 224 are used for user interface. The key input unit 218 includes a plurality of keys enabling a user to input numbers or characters. If the key input unit 218 detects the pressing of a key, the key input unit 218 delivers input data corresponding to the key to the controller 200. The display unit 224 may be realized using a Liquid Crystal Display (LCD) and displays the current state of the mobile communication terminal, a menu, -and a message input by a user under the control of the controller 200. The display unit 224 may include a touch screen.

The structure of the mobile communication terminal shown in FIG. 1 is only one example and may be variously changed. For example, the voice feature extracting unit 212 and the voice synthesizing unit 214 may be realized in one chip together with the controller 200.

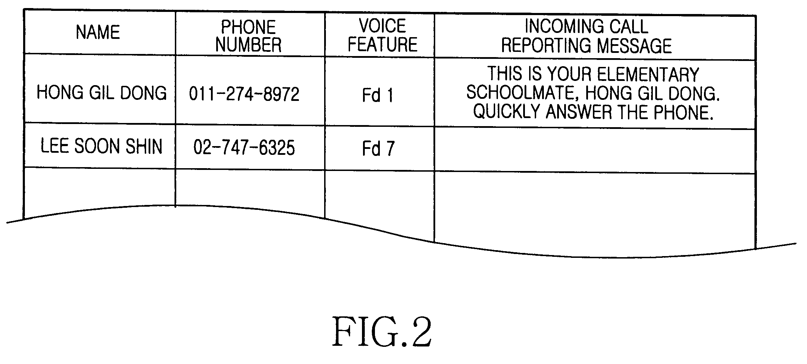

FIG. 2 illustrates the structure of a phone book included in the mobile communication terminal according to an embodiment of the present invention.

As shown in FIG. 2, information regarding a caller includes the name and the phone number of the caller or the call back number of the caller. In addition, the phone book includes voice features Fd1 and Fd7 of callers called 'Hong Gil Dong' and 'Lee Soon Shin'. In this example, only Hong Gil Dong has an incoming call reporting message. The incoming call reporting message may show the contents desired by a user in a character type.

In the case of Lee Soon Shin, when an incoming call reporting message is not stored, synthetic sound based on default voice features may be output. For example, the synthetic sound based on default voice features can be set as "This is (name). Please, answer the phone" and output as the incoming call reporting message. When a message has been set, as in the case of Hong Gil Dong, a user utilizing a mobile communication terminal hears "This is your elementary schoolmate, Hong Gil Dong. Quickly answer the phone" in Hong Gil Dong's voice when receiving a call from Hong Gil Dong. In contrast, when receiving a call from Lee Soon Shin, a user hears "This is Soon Shin. Please, answer the phone" in the synthetic sound based on default voice features.

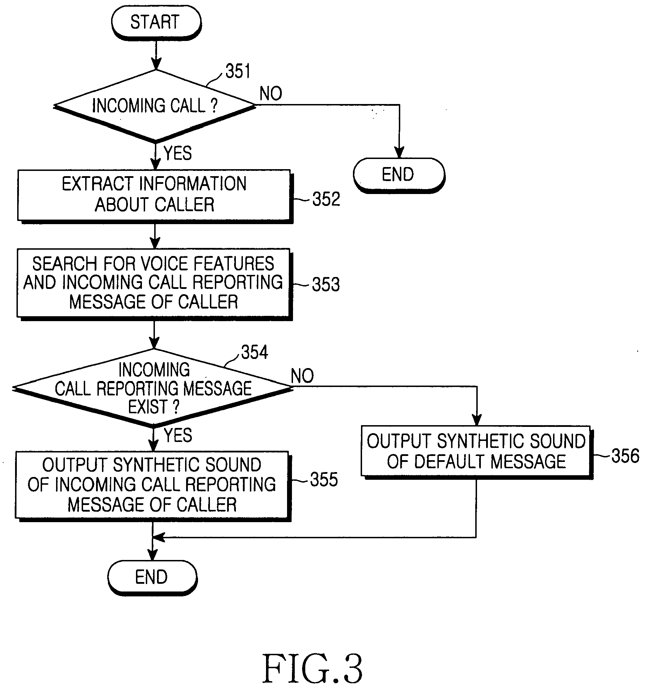

FIG. 3 is a flowchart illustrating a method for reporting an incoming call using a voice according to an embodiment of the present invention.

In step 351, the controller 200 determines if an incoming call is detected. If an incoming call is detected, the controller 200 extracts information (e.g., name, phone number, etc.) regarding a caller from the incoming call in step 352.

In step 353, the controller 200 searches a corresponding memory for voice features and an incoming call reporting message corresponding to the extracted information regarding the caller.

In step 354, the controller 200 determines if there is an incoming call reporting message corresponding to the extracted information regarding the caller. If voice features and an incoming call reporting message of the caller are found, the controller 200 outputs the incoming call reporting message by performing voice synthesis based on the voice features of the caller in step 355. In contrast, if the incoming call reporting message corresponding to the extracted information regarding the caller is not found, the controller 200 searches a corresponding memory for a default message and outputs the default message by performing voice synthesis based on the voice features of the caller in step 356.

A detailed description about techniques for extracting voice features of a caller from input voice using a voice feature extracting unit will be omitted. However, there be various methods for inputting the voice of a counterpart (a caller) in order to extract and store voice features. For example, the voice of the counterpart (the caller) is directly recorded using the mobile communication terminal of a receiver, and then voice features may be extracted from the recorded voice. In addition, in a case where the caller directly records his/her own voice or generates voice data using a voice message or a voice mail-box and then transmits these to the mobile communication terminal of the receiver, the receiver may extract voice features from the received voice data.

As described above, according to the present invention, an incoming call is reported through the voice of a caller, so that it is easy for a user to recognize a person who originates a call.

While the invention has been shown and described with reference to certain preferred embodiments thereof, it will be understood by those skilled in the art that various changes in form and details may be made therein without departing from the scope of the invention. For example, the present invention is adaptable for a case of receiving a message (a short message) as well as a voice call. Further, according to another embodiment of the present invention, the received message can also be, for example, a voice message that has been placed on the occasion of an incoming call such as known from phone answering equipment. Consequently, the scope of the invention should not be limited to the embodiments, but should be defined by the appended claims and equivalents thereof.

## Claims

1. An apparatus for reporting an incoming call in a mobile communication terminal, the apparatus comprising:
a feature memory block for storing voice features extracted from a caller's voice corresponding to information regarding the caller;
a report message memory block for storing in a character type a message reporting the incoming call;
a control unit for, if an incoming call is detected, extracting information regarding the caller from the detected incoming call and searching the feature memory block for voice features corresponding to the caller information; and
a voice synthesizing unit for outputting a message reporting the incoming call by performing voice synthesis based on the searched voice features.

2. The apparatus as claimed in claim 1, wherein the feature memory block and the report message memory block correspond to portions of a phone book stored in a memory.

3. The apparatus as claimed in claim 1 or 2, wherein the information regarding the caller includes at least one of a name of the caller, a phone number of the caller, and a call back number of the caller.

4. The apparatus as claimed in one of claims 1 to 3, wherein the message of reporting the incoming call varies according to callers.

5. The apparatus as claimed in one of claims 1 to 4, wherein the report message memory block stores at least one message for reporting an incoming call corresponding to or regardless of the information regarding the caller.

6. The apparatus as claimed in one of claims 1 to 5, further comprising a voice feature extracting unit for extracting voice features from input voice.

7. A method for reporting an incoming call in a mobile communication terminal including a feature memory block and a report message memory block, the mobile communication terminal having a phone function, the feature memory block storing voice features corresponding to information regarding a caller having a corresponding voice, the report message memory block storing in a character type a message reporting the incoming call, the method comprising the steps of:
detecting the incoming call;
extracting-information regarding the caller from the incoming call;
searching the feature memory block for voice features corresponding to the extracted information regarding the caller; and
outputting the message reporting the incoming call by performing voice synthesis based on the searched voice features.

8. The method as claimed in claim 7, wherein the information regarding the caller includes at least one of a name of the caller, a phone number of the caller, and a call back number of the caller.

9. The method as claimed in claim 7 or 8, further comprising searching for the message reporting the incoming call corresponding to the extracted information regarding the caller,
wherein the message reporting the incoming call is stored in the report message memory block corresponding to the information regarding the caller.

10. The method as claimed in one of claims 7 to 9, further comprising:
searching for the message reporting the incoming call corresponding to the extracted information regarding the caller; and
searching for a message reporting the incoming call stored regardless of the information regarding the caller if the message reporting the incoming call corresponding to the extracted information regarding the caller is not located,
wherein at least one message reporting the incoming call is stored in the report message memory block corresponding to or regardless of caller information.

11. An apparatus for reporting an incoming call in a mobile communication terminal, the apparatus comprising:
a feature memory block for storing voice features extracted from a caller's voice corresponding to information regarding the caller;
a report message memory block for storing in a character type a message reporting the incoming call;
a control unit for, if an incoming call is detected, extracting information regarding the caller from the detected incoming message and searching the feature memory block for voice features corresponding to the information regarding the caller; and
a voice synthesizing unit for outputting a message reporting the incoming call by performing voice synthesis based on the searched voice features.

12. The apparatus as claimed in claim 11, wherein the feature memory block and the report message memory block correspond to portions of a phone book stored in a memory.

13. The apparatus as claimed in claim 11 or 12, wherein the information regarding the caller includes at least one of a name of the caller, a phone number of the caller, and a call back number of the caller.

14. The apparatus as claimed in one of claims 11 to 13, wherein the message reporting the incoming call varies according to callers.

15. The apparatus as claimed in one of claims 11 to 14, wherein the report message memory block stores at least one message reporting an incoming call corresponding to or regardless of the information regarding the caller.

16. The apparatus as claimed in one of claims 11 to 15, further comprising a voice feature detecting unit for extracting voice features from input voice.

17. A method for reporting an incoming call in a mobile communication terminal including a feature memory block and a report message memory block, the mobile communication terminal having a phone function, the feature memory block storing voice features extracted from a caller's voice corresponding to information regarding the caller, the report message memory block storing in a character type a message reporting the incoming call, the method comprising the steps of:
detecting the incoming call;
extracting information regarding a caller from the incoming call;
searching the feature memory block for voice features corresponding to the extracted information regarding the caller; and
outputting the message reporting the incoming call by performing voice synthesis based on the searched voice features.

18. The method as claimed in claim 17, wherein the information regarding the caller includes at least one of a name of the caller, a phone number of the caller and a call back number of the caller.

19. The method as claimed, in claim 17 or 18, further comprising searching for the message reporting the incoming call corresponding to the extracted information regarding the caller, wherein the message reporting the incoming call is stored in the report message memory block corresponding to the information regarding the caller.

20. The method as claimed in one of claims 17 to 19, further comprising:
searching for the message reporting the incoming call corresponding to the extracted information regarding the caller; and
searching for a message reporting the incoming call stored regardless of the information regarding the caller if the message of reporting the incoming call corresponding to the extracted information regarding the caller is not located,
wherein at least one message reporting the incoming call is stored in the report message memory block corresponding to or regardless of information regarding a caller.

21. A method for controlling an alarm signal in response to a received phone number in a mobile communication terminal, the method comprising the steps of:
receiving a message having information regarding at least one of a name, a caller, and a call back number;
comparing received information with at least one user registration number;
selecting previously-registered voice features if it is determined that the received information is identical to the user registration number;
selecting previously-registered default voice features if it is determined that the received information is not identical to the user registration number; and
outputting synthetic sound made by using the selected voice features or default voice features.
